# EUROPÄISCHE PATENTSCHRIFT

(11) **EP 1 719 925 B1**
(45) Veröffentlichungstag und Bekanntmachung des Hinweises auf die Patenterteilung: **29.08.2007**
(21) Anmeldenummer: 06008406.8
(22) Anmeldetag: 24.04.2006
(51) Int. Cl.: F16B 9/02, F16F 9/54

(54) **Befestigungssystem für längliche, quersteife Verbindungselemente**
Fastening system for elongated, transversely stiff connecting elements
Système de fixation d'éléments de liaison allongés et transversalement rigides

(30) Priorität: 02.05.2005 DE 102005020778
(43) Veröffentlichungstag der Anmeldung: 08.11.2006
(73) Patentinhaber: CTS Fahrzeug-Dachsysteme GmbH, 74321 Bietigheim-Bissingen (DE)
(72) Erfinder: Reszka, Josef, 25421 Pinneberg (DE); Schumacher, Thorsten, 25495 Kummerfeld (DE)
(74) Vertreter: Wittner, Walter

(56) Entgegenhaltungen:
- DE-C1- 4 445 233
- DE-C1- 19 544 590

## Beschreibung

Die Erfindung betrifft ein Befestigungssystem für längliche, quersteife Verbindungselemente, insbesondere stangenartige Verbindungselemente, gemäß dem Oberbegriff des Anspruches 1.

Ein Befestigungssystem der vorgenannten Art ist aus der DE 44 45 233 C1 bekannt, bei der als längliches, quersteifes Verbindungselement ein Kolben-Zylinderaggregat in Form einer Gasfeder vorgesehen ist, die kolben- wie auch zylinderseitig an ihren einander gegenüberliegenden Enden in Querrichtung offene Ösen zur Aufnahme von Anschlusskörpern zugehörigen Befestigungsbolzen aufweist. Die Befestigungsbolzen sind in den Ösen über Buchsen geführt und gehalten, die in die Ösen einsteckbar sind und die durch Verrastung mittels axialer Anschlagbunde zur aufnehmenden Öse axial festgelegt sind, wobei der Befestigungsbolzen im Bereich seines freien Endes mit einer Rastnut versehen ist, in die ein stirnseitiger Rastbund der Buchse eingreift. Die Buchsen können auch in die Ösen eingespritzt sein.

Sind die Buchsen eingesteckt, so bedingt dies aufgrund der axialen Verrastung über einen radial außen liegenden Anschlagbund eine hinreichende Nachgiebigkeit der Buchse nach radial innen, um den Einsteckvorgang zu ermöglichen, was entsprechende Elastizitäten des Buchsenmaterials und/oder konstruktive Ausgestaltungen der Buchse, wie beispielsweise eine Segmentierung voraussetzt. In beiden Fällen erweisen sich für die erforderliche radiale Elastizität größere Wanddicken als nachteilig, wobei in Abhängigkeit von den Einsatzverhältnissen entsprechende radiale Nachgiebigkeiten - beispielsweise erreicht über die Werkstoffwahl - unerwünscht sein können und entsprechende konstruktive Maßnahmen, wie beispielsweise eine Segmentierung, zusätzlichen Aufwand bedingen.

Die endseitige Verrastung über einen radial eingreifenden Rastbund der Buchse in eine Rastnut des Bolzens bedingt, um Axialspiele zu vermeiden, eine entsprechende Maßhaltigkeit, die zu zusätzlichem Aufwand führt. Die Einsteckbarkeit der Buchse bei einer Ausbildung mit einem radial äußeren Randwulst am in steckrichtung vorderen Ende bedingt weiter das Einstecken der Buchse vor dem Einfädeln des aufzunehmenden Befestigungsbolzens und schränkt dadurch die Verwendung eines derartigen Befestigungssystems auf Fälle ein, bei denen die Achsen von Öse und Befestigungsbolzen bei der Montage fluchten.

Weiteren Spielraum bringen Lösungen, wie sie in Befestigungssystemen für längliche quersteife Verbindungselemente, insbesondere wiederum Gasfedern, aus der DE 196 38 031 C2 bekannt sind, bei der die Befestigungsbolzen als Kugelbolzen ausgebildet sind, die in Befestigungsösen der quersteifen Verbindungselemente eingreifen und in.diesen über einsteckbare Buchsen festgelegt sind, die über die Formgebung ihrer Kontur axial sowie auch verdrehbar in den Ösen gehalten sind und die ihrerseits kalottenförmige Ausformungen für die Kugelbolzen aufweisen. Über den Äquator der kalottenförmigen Ausformungen hinausgreifende Finger der Buchsen hintergreifen die Köpfe der Kugelbolzen im montierten Zustand und sind zur Montage der Kugelbolzen radial in Ausformungen der Ösen abdrängbar, die sich in Umfangsrichtung über die Breite der Finger erstrecken und zwischen denen ösenseitige Abdrängzonen liegen, in die die Finger durch Verdrehen der Buchsen um die Ösenachse einzufahren sind und in Überdeckungslage zu denen die Finger in ihrer Hintergriffslage zum Kugelbolzen abgestützt sind.

Die Kugelbolzen sind zur Einführung in die Buchsen, also zur Montage nicht auf eine fluchtende Ausrichtung der Bolzenachse zur Buchsenachse gebunden und es ist dadurch auch möglich, bei einem derartigen Befestigungssystem quersteife Verbindungselemente zwischen Anschlusskörpern zu montieren, die in Richtung der Bolzenachsen zueinander versetzt liegen und ausgehend von denen die Bolzen sich gegeneinander erstrecken, sodass zur Montage eine Schränkung der Bolzenachsen zu den Achsen der jeweils aufnehmenden Ösen in der Montageausgangslage gegeben ist.

Der Erfindung liegt die Aufgabe zugrunde, ein Befestigungssystem der eingangs genannten Art dahingehend auszugestalten, dass auch ein zylindrischer Befestigungsbolzen ungeachtet einer eventuell verschränkten Lage der Bolzenachse zur Ösenachse bei einfachem Aufbau und bei günstigen Montagemöglichkeiten in eine Öse einzusetzen ist.

Erreicht wird dies gemäß der Erfindung mit den Merkmalen des Anspruches 1, demzufolge die axialen Anschlagbunde einerseits dem Befestigungsbolzen oder dem zum Befestigungsbolzen lagefesten Anschlusskörper und andererseits der in die Öse einzusteckenden Buchse zugeordnet sind, sodass die Öse bei auf dem Bolzen verrasteter Buchse zwischen diesen Anschlagbunden liegt, von denen der buchsenseitige Anschlagbund axial im Übergang zum buchsenseitigen Rastbund liegt, der seinerseits zum Anschlagbund axial beabstandet ist. Bei einer derartigen Lösung ist einerseits die Buchse von beiden Seiten in die Öse einführbar und gegen den sich jeweils entgegengesetzt zur Einführrichtung der Buchse erstreckenden Bolzen axial gesperrt, insbesondere verrastet oder verspannt und verrastet. Zum anderen ist für die Montage der Buchse in der Öse keinerlei Verformung der Buchse erforderlich, sodass die Wanddicke der Buchse sowohl entsprechend den Anforderungen der Trag- und Führungsfunktionen wie auch entsprechend den Montagegegebenheiten gewählt werden kann, womit auch die Voraussetzungen für die Nutzung dieses Befestigungssystems geschaffen sind, wenn zum Beispiel bei sich entgegengesetzt erstreckenden Befestigungsbolzen zum Auffädeln des jeweiligen Verbindungselements auf diese Bolzen eine Schräglage der Bolzenachsen zu den jeweiligen Ösenachsen gegeben ist.

Im Rahmen der Erfindung erweist es sich insbesondere als zweckmäßig, wenn der Rastbund durch vom buchsenseitigen Anschlagbund ausgehende, auf ihr freies Ende konisch radial zulaufende, elastische Rastfinger gebildet ist, denen seitens des Befestigungsbolzens eine entsprechende Rastnut zugeordnet ist, da so über die Rastfinger eine toleranzausgleichende axiale, gegebenenfalls auch eine in Bezug auf die Höhe der Spannkraft einstellbare Verspannung der Öse zwischen dem der Buchse zugehörigen Anschlagbund und dem bolzenseitigen Anschlagbund erreicht werden kann, wobei dieser Anschlagbund selbstverständlich auch an dem den Bolzen tragenden Anschlusskörper vorgesehen sein kann.

Ein-, aber auch beidseitig können zwischen den Anschlagbunden und der Öse Beilagscheiben vorgesehen werden, über die sich sowohl Reibverhältnisse verbessern wie auch axiale Toleranzen ausgleichen lassen.

Für den Bolzen erweist es sich als zweckmäßig, diesen endseitig in axialer Begrenzung der Rastnut mit einem kappenartigen Endstück zu versehen, sodass die der Buchse zugeordneten, in die Rastnut eingreifenden und radial schräg nach innen verlaufenden Rastfinger weitgehend geschützt liegen.

Sofern die Montage von Verbindungselementen eine Ausgangslage der in Querrichtung offenen Ösen zu den in die Ösen einführbaren Bolzen bedingt, in der ein Achsversatz oder eine Schränkung der Achsen von Ösen und Bolzen gegeben ist, ermöglicht das erfindungsgemäße Befestigungssystem die Nutzung des durch die Buchsen in ihrem in den Ösen montierten Zustand eingenommenen Raumes zum Abgleich des Achsversatzes bzw. der schränkungsbedingten Abweichungen in der Montageausgangslage und es kann die Zentrierung der Ösen zu den Bolzen über die einzusteckenden Buchsen erfolgen, wenn das Verbindungselement zu den Anschlusskörpern seine der Montageendlage entsprechende Lage erreicht hat. Dabei kann über die Wandstärke der Buchsen, in entsprechender Abstimmung auf die Durchmesserverhältnisse von Bolzen und aufnehmender Öse, eine Anpassung an die Montagebedingungen vorgenommen werden, in entsprechender Weise aber auch durch Aufsatzhülsen zu den Bolzen oder Einsatzhülsen für die Ösen, sodass mit gleichen Grundelementen verschiedenen Montagegegebenheiten Rechnung getragen werden kann und ein besonders zweckmäßiges Montageverfahren ermöglicht wird.

Weitere Einzelheiten und Merkmale der Erfindung ergeben sich aus den Ansprüchen. Ferner wird die Erfindung nachstehend anhand eines Ausführungsbeispieles erläutert. Es zeigen:
- Fig. 1: ein längliches, quersteifes Verbindungselement in Form einer Verbindungsstange, die sich zwischen Anschlusskörpern erstreckt und mit den Anschlusskörpern über sich gegenläufig erstreckende Befestigungsbolzen verbunden ist, welche in endseitige Ösen des Verbindungselementes eingreifen und dort über Buchsen fixiert sind,
- Fig. 2: eine der Fig. 1 entsprechende Darstellung, die die Montageausgangslage für das stangenförmige Verbindungselement beim Auffädeln auf die den Anschlusskörpern zugeordneten Befestigungsbolzen zeigt, und
- Fig. 3: eine schematisierte Explosionsdarstellung eines Anschlussbereiches zwischen stangenartigem Verbindungselement und Anschlusskörper.

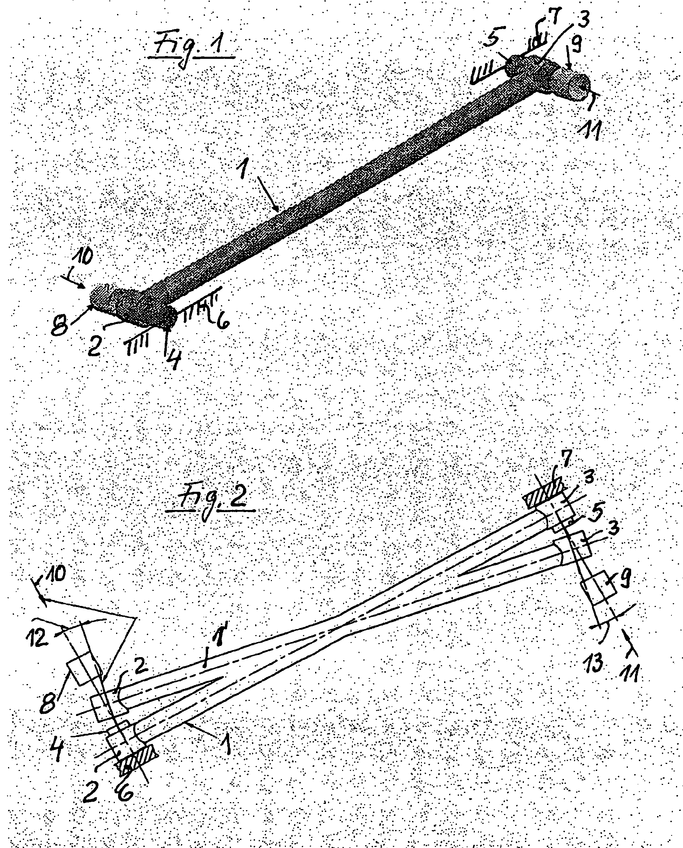

Fig. 1 zeigt in einer schematisierten Perspektivdarstellung ein längliches, quersteifes Verbindungselement 1, das als Stange dargestellt ist, das aber auch als längenveränderliches Verbindungselement durch einen Teleskopzylinder, eine Gasfeder oder dergleichen gebildet sein kann. Das Verbindungselement 1 ist an seinen gegenüberliegenden Enden mit in Querrichtung offenen Ösen 2, 3 versehen und über diese Ösen 2, 3 mit Befestigungsbolzen 4, 5 zu verbinden, die jeweils einem Anschlusskörper 6, 7 zugeordnet sind, wobei als Anschlusskörper 6, 7 Gestängeelemente, Rahmenteile oder dergleichen in Frage kommen, wie sie beispielsweise in Verbindung mit Hecktüren, Heckdeckeln, Hauben oder dergleichen bei Fahrzeugen gegeben sind.

Die Befestigungsbolzen 4, 5 sind in den jeweiligen Ösen 2, 3 über Buchsen 8, 9 zu fixieren, die in der Montageendlage in die Ösen 2, 3 einzuschieben sind und diese gegen die Befestigungsbolzen 4, 5 abstützen. Die Einschubrichtungen für die Buchsen 8, 9 sind durch die Pfeile 10 und 11 angedeutet.

Fig. 2 zeigt in einer schematisierten Draufsicht die in Fig. 1 dargestellte Ausgangslage beim Auffädeln des stangenförmigen Verbindungselementes 1 auf die den Anschlusskörpern 6 bzw. 7 zugeordneten Bolzen 4, 5, wobei in dieser Ausgangslage das stangenförmige Verbindungselement 1 unter einem schiefen Winkel zu den Achsen der Bolzen 4, 5 liegt, die parallel zueinander liegen, sodass zum Auffädeln der endseitig zum Verbindungselement 1 vorgesehenen Ösen 2, 3 auf die Befestigungsbolzen 4, 5 die dargestellte verschränkte Lage, in der das Verbindungselement mit 1' bezeichnet, notwendig ist. Der der Ausgangslage entsprechende Schränkungswinkel zwischen der Achse des jeweiligen Bolzens 4, 5 und der Achse der jeweiligen aufzufädelnden Öse 2, 3 ist bezogen auf die Montageausgangslage in Fig. 2 mit 12 bzw. 13 bezeichnet. Sobald das Verbindungselement 1 seine der montierten Lage entsprechende Erstreckung einnimmt - das Verbindungselement 1 erstreckt sich senkrecht zu den Bolzen 4, 5 - kann die jeweilige Buchse 8 bzw. 9, den Bolzen 4, 5 übergreifend, in die jeweilige Öse 2, 3 eingeschoben werden und nimmt den Raum ein, der für das verschränkte Einführen des jeweiligen Bolzens 4, 5 in die entsprechende Öse 2, 3 notwendig war. Über die Buchse 8, 9 wird dabei im Rahmen der Erfindung zugleich auch die axiale Fixierung der jeweiligen Öse, 2, 3 gegenüber dem aufgenommenen Bolzen 4, 5 erreicht.

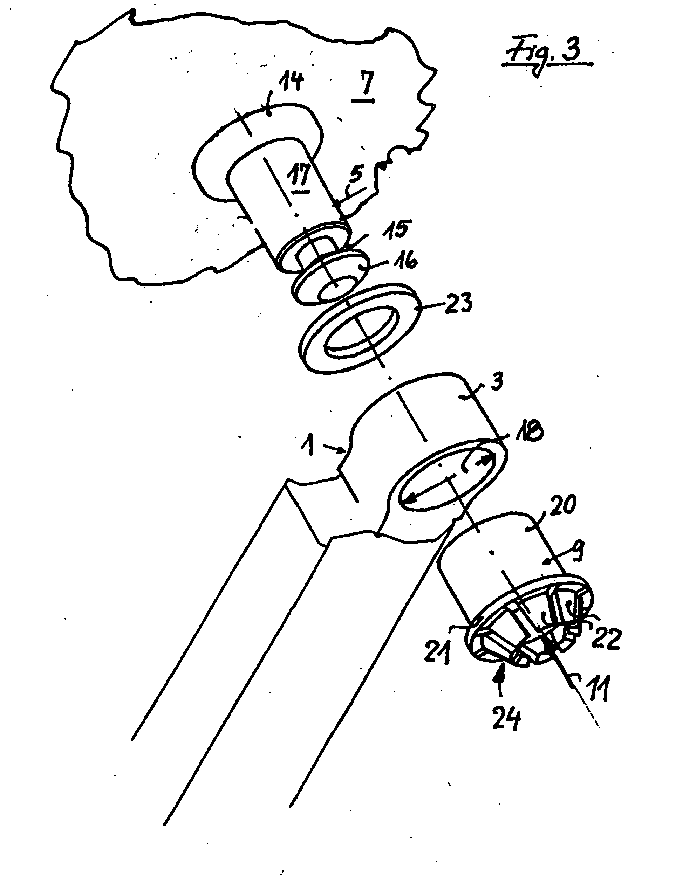

Fig. 3 zeigt den konstruktiven Aufbau bezogen auf einen Anschlusskörper 7 und einen zum Anschlusskörper 7 lagefesten Befestigungsbolzen 5, der in beliebiger Weise mit dem Anschlusskörper 7 verbunden sein kann, wobei in der Darstellung gemäß Fig. 3 anschließend an den Anschlusskörper 7 ein Anschlagbund 14 vorgesehen ist, der dem Bolzen 5 zugeordnet ist, aber auch durch einen, ringförmigen Ansatz,des Anschlusskörpers 7 oder eine Beilagscheibe gebildet sein kann. Der zum Anschlusskörper 7 auskragende Bolzen 5 weist im Bereich seines freien Endes eine Rastnut 15 auf, die zum freien Ende des Bolzens 5 hin über ein kappenartiges Endstück 16 des Bolzens 5 begrenzt ist. Im Übergang zwischen der Rastnut 15 und dem Anschlagbund 14 liegt der Tragteil 17 des Bolzens, auf dem das Verbindungselement 1 über seine Öse 3 zu führen und abzustützen ist. Der Innendurchmesser 18 der Öse ist größer als der Durchmesser des Tragteiles 17 des Befestigungsbolzens 5, und der in der Montageendstellung gegebene Ringraum zwischen dem Tragteil 17 und dem Innendurchmesser 18 der Öse 3 wird durch den Hülsenkörper 20 der Buchse 9 aufgefüllt, der an seinem bezogen auf die Einsteckrichtung gemäß Pfeil 11 rückwärtigen Ende den radial nach außen kragenden Anschlagbund 21 trägt. Ausgehend vom Anschlagbund 21 erstrecken sich entgegen der Einsteckrichtung gemäß Pfeil 11 Rastfinger 22, die gegen ihr freies Ende konisch aufeinander zulaufen, sodass sie im auf den Befestigungsbolzen 5 aufgefädelten Zustand der Buchse 9 in die Rastnut 15 einrastend eingreifen und dadurch die Axiallage der Buchse 9 sowie auch der Öse 3 des Verbindungselementes 1 sichern.

Fig. 3 zeigt des Weiteren, dass zwischen der Öse 3 und dem zum Anschlusskörper 7 benachbarten Anschlagbund eine Beilagscheibe 23 vorgesehen ist, sei es im Hinblick auf eine Verbesserung der Reibverhältnisse zwischen dem Anschlagbund 14 und der Öse 3, sei es zum Abgleich axialer Toleranzen. Im Rahmen der Erfindung liegt es selbstverständlich auch, den Anschlagbund 14 durch derartige Beilagscheibe zu ersetzen, die sich dann unmittelbar gegen den Anschlagkörper 7 abstützen würde.

Über die einen Rastbund 24 bildenden Rastfinger 22 lässt sich auch eine axiale Verspannung der Öse 3 zum Anschlusskörper 7 erreichen, sodass mit der erfindungsgemäßen Lösung auch eine axial spielfreie Lagerung des Verbindungselementes 1 zu dem jeweiligen Anschlusskörper 7 zu erreichen ist.

## Patentansprüche

1. Befestigungssystem für längliche, quersteife Verbindungselemente (1), insbesondere stangenartige Verbindungselemente, die endseitig - zumindest einenends - mit einer in Querrichtung offenen Öse (2,3) zur Aufnahme eines einem Anschlusskörper (6,7) zugehörigen zylindrischen Befestigungsbolzen (4,5) versehen sind, der über eine in die Öse (2,3) eingesteckte Buchse (8,9) in der Öse (2,3) geführt ist und der zur Öse (2,3) axial festgelegt ist, wobei die Buchse (8,9) gegen die Öse (2,3) über einen vom Anschlusskörper abgelegenen endseitigen Anschlagbund (21) und gegen den Befestigungsbolzen (4,5) über einen endseitigen und in eine Rastnut (15) des Befestigungsbolzens eingreifenden Rastbund (24) axial abgestützt ist,
**dadurch gekennzeichnet,**
**dass** die Öse (2, 3) bei eingesteckter Buchse (8, 9) zwischen dem endseitigen Anschlagbund (21) der Buchse (8, 9) und einem gegenüberliegenden Anschlagbund (14) des Anschlusskörpers (6, 7) eingespannt ist, in Richtung auf den die Buchse (8, 9) axial elastisch über den Rastbund (24) abgestützt ist, der axial beabstandet zum endseitigen Anschlagbund (21) der Buchse (8, 9) in die Rastnut (15) des Befestigungsbolzens (4, 5) eingreift.

2. Befestigungssystem nach Anspruch 1,
**dadurch gekennzeichnet,**
**dass** der Rastbund (24) durch vom Anschlagbund (21) ausgehende, auf ihr freies Ende konisch zulaufende Rastfinger (22) gebildet ist.

3. Befestigungssystem nach einem der Ansprüche 1 oder 2,
**dadurch gekennzeichnet,**
**dass** zumindest einerseits der Öse (3) eine Beilagscheibe (23) vorgesehen ist.

4. Befestigungssystem nach Anspruch 3,
**dadurch gekennzeichnet,**
**dass** zwischen dem zum Anschlusskörper (6, 7) benachbarten Anschlagbund (14) und der Öse (2, 3) eine Beilagscheibe (23) vorgesehen ist.

5. Befestigungssystem nach einem der vorhergehenden Ansprüche,
**dadurch gekennzeichnet,**
**dass** die dem Anschlusskörper (6, 7) zugeordneten Befestigungsbolzen (4, 5) gegenläufige Erstreckungsrichtung aufweisen, dass das stangenförmige Verbindungselement (1) bei der Montage in der Ausgangslage eine zu den Befestigungsbolzen (4, 5) verschränkte Ausgangslage einnimmt und dass die Wandstärke der Buchsen (8, 9) dem Radialspiel entspricht, das in der Montageausgangslage durch die Schränkung gegeben ist und für den montierten Zustand abzugleichen ist.

## Claims

1. Attachment system for elongated, transversely stiff fastening elements (1), in particular rod-like fastening elements which are provided at the end - at least at one end - with an eyelet (2, 3) open in the transverse direction for receiving a cylindrical fastening bolt (4, 5) associated with a connecting element (6, 7), and which is guided in the eyelet (2, 3) via a bushing (8, 9) inserted into the eyelet (2, 3) and which is axially secured relative to the eyelet (2, 3), the bushing (8, 9) being axially supported against the eyelet (2, 3) by a terminal stop shoulder (21) spaced apart from the connecting element, and being axially supported against the fastening bolt (4, 5) by a terminal latching shoulder (24) engaging in a latching groove (15) of the fastening bolt,
**characterized in that**
the eyelet (2, 3) is clamped, when the bushing (8, 9) is inserted, between the terminal stop shoulder (21) of the bushing (8, 9) and an opposing stop shoulder (14) of the connecting element (6, 7), in the direction of which the bushing (8, 9) is axially and elastically supported via the latching shoulder (24), which engages in the latching groove (15) of the fastening bolt (4, 5) and is axially spaced apart from the terminal stop shoulder (21) of the bushing (8, 9).

2. Attachment system according to Claim 1, **characterized in that** the latching shoulder (24) is formed by latching fingers (22) extending from the stop shoulder (21) and converging conically towards their free end.

3. Attachment system according to one of Claims 1 or 2, **characterized in that** at least on one side of the eyelet (3) a washer (23) is provided.

4. Attachment system according to Claim 3, **characterized in that** between the stop shoulder (14) adjacent to the connecting element (6, 7) and the eyelet (2, 3) a washer (23) is provided.

5. Attachment system according to one of the preceding claims, **characterized in that** the fastening bolts (4, 5) associated with the connecting element (6, 7) extend in opposing directions, **in that** the rod-shaped fastening element (1) during the assembly in the initial position adopts an offset initial position relative to the fastening bolts (4, 5) and **in that** the wall thickness of the bushings (8, 9) corresponds to the radial play which is provided in the initial assembly position by the offset and, for the assembled state, has to be compensated.

## Revendications

1. Système de fixation pour éléments de connexion allongés transversalement rigides (1), notamment des éléments de connexion de type barres, qui sont pourvus du côté de l'extrémité - au moins à une extrémité - d'un oeillet (2, 3) ouvert dans la direction transversale, pour recevoir un boulon de fixation (4, 5) cylindrique associé à un corps de raccordement (6, 7), qui est guidé dans l'oeillet (2, 3) par le biais d'une douille (8, 9) enfoncée dans l'oeillet (2, 3) et qui est fixé axialement par rapport à l'oeillet (2, 3), la douille (8, 9) étant supportée axialement contre l'oeillet (2, 3) par le biais d'un épaulement de butée (21) du côté de l'extrémité, détaché du corps de raccordement, et contre le boulon de fixation (4, 5) par le biais d'un épaulement d'encliquetage (24) du côté de l'extrémité et venant en prise dans une rainure d'encliquetage (15) du boulon de fixation,
**caractérisé en ce que**
lorsque la douille (8, 9) est enfoncée, l'oeillet (2, 3) est serré entre l'épaulement de butée (21) de la douille (8, 9) du côté de l'extrémité et un épaulement de butée opposé (14) du corps de raccordement (6, 7), dans la direction duquel la douille (8, 9) est supportée axialement et élastiquement par le biais de l'épaulement d'encliquetage (24), qui vient en prise à distance axiale de l'épaulement de butée (21) de la douille (8, 9) du côté de l'extrémité dans la rainure d'encliquetage (15) du boulon de fixation (4, 5).

2. Système de fixation selon la revendication 1,
**caractérisé en ce que**
l'épaulement d'encliquetage (24) est formé par des doigts d'encliquetage (22) convergeant coniquement vers leur extrémité libre et partant de l'épaulement de butée (21).

3. Système de fixation selon l'une quelconque des revendications 1 ou 2,
**caractérisé en ce que**
l'on prévoit une rondelle (23) au moins d'un côté de l'oeillet (3).

4. Système de fixation selon la revendication 3,
**caractérisé en ce que**
l'on prévoit une rondelle (23) entre l'épaulement de butée (14) adjacent au corps de raccordement (6, 7) et l'oeillet (2, 3).

5. Système de fixation selon l'une quelconque des revendications précédentes,
**caractérisé en ce que**
les boulons de fixation (4, 5) associés au corps de raccordement (6, 7) présentent des directions d'étendue opposées, **en ce que** l'élément de connexion en forme de barre (1) prend une position de départ décalée par rapport aux boulons de fixation (4, 5) lors du montage dans la position de départ et **en ce que** l'épaisseur de paroi des douilles (8, 9) correspond au jeu radial qui est défini par le décalage dans la position de départ de montage, et qui doit être compensé pour obtenir l'état monté.
